(19) Europäisches Patentamt / European Patent Office / Office européen des brevets

(11) **EP 4 299 648 A1**

(12) **EUROPEAN PATENT APPLICATION**
published in accordance with Art. 153(4) EPC

(43) Date of publication:
**03.01.2024 Bulletin 2024/01**

(21) Application number: **22759668.1**

(22) Date of filing: **22.02.2022**

(51) International Patent Classification (IPC):
**C08G 69/02** (2006.01)        **C08G 69/08** (2006.01)
**C08J 3/16** (2006.01)        **B33Y 10/00** (2015.01)
**B29C 64/153** (2017.01)        **B29C 64/314** (2017.01)
**B33Y 70/00** (2020.01)

(52) Cooperative Patent Classification (CPC):
**B29C 64/153; B29C 64/314; B33Y 10/00;
B33Y 70/00; C08G 69/02; C08G 69/08; C08J 3/16;**
Y02P 10/25

(86) International application number:
**PCT/JP2022/007368**

(87) International publication number:
**WO 2022/181633 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021   JP 2021028425
28.09.2021   JP 2021157582**

(71) Applicant: **Toray Industries, Inc.
Tokyo 103-8666 (JP)**

(72) Inventors:
• **IWATA, Hirokazu
Nagoya-shi, Aichi 455-8502 (JP)**

• **NAKAMURA, Tomohiko
Nagoya-shi, Aichi 455-8502 (JP)**
• **OKUNO, Yota
Otsu-shi, Shiga 520-8558 (JP)**
• **WATANABE, Kei
Nagoya-shi, Aichi 455-8502 (JP)**
• **NISHIDA, Mikiya
Tokyo 103-8666 (JP)**
• **ASANO, Itaru
Nagoya-shi, Aichi 455-8502 (JP)**

(74) Representative: **Mewburn Ellis LLP
Aurora Building
Counterslip
Bristol BS1 6BX (GB)**

(54) **POLYMER POWDER, METHOD FOR PRODUCING SAME AND METHOD FOR PRODUCING 3-DIMENSIONAL MODEL OBJECT**

(57)   A polymer powder comprising a polyamide, characterized in that the melting point determined in differential scanning calorimetry is 190°C or higher, the difference between the melting point and the melting onset temperature determined in differential scanning calorimetry is less than 30°C, and the D50 particle size is 1 $\mu$m or more and 100 $\mu$m or less; a method for producing the same; and a method for producing a 3-dimensional model object by a powder bed fusion method using the same. The powder polymer of the present invention can maintain the powder form in a laser non-irradiation area even in a large-sized modeling device. By using the polymer powder in the production of a model object, a model object having small warpage can be provided.

EP 4 299 648 A1

**Description**

<u>Technical Field of the Invention</u>

The present invention relates to a polymer powder, a method for producing the same, and a method for producing a 3-dimensional model object by a powder bed fusion method using the same.

<u>Background Art of the Invention</u>

As a technology for producing a 3-dimensional model object (hereinafter, sometimes referred to as a model object), a powder bed fusion method is known. The model object by the powder bed fusion method is produced by sequentially repeating a thin layer forming step in which the powder is spread into a thin layer, and a cross-sectional shape forming step in which the formed thin layer is selectively melted into a shape corresponding to the cross-sectional shape of an object to be modeled, and the resin powder grains are joined. Here, as a method of selectively melting the powder, there are a selective laser sintering method in which, after providing a powder layer, the layer is selectively melted by the laser and solidified at a position corresponding to the cross section of the object, and these layers are adhered and laminated to each other, and in addition, a selective absorption sintering method and a selectively inhibited sintering method, in which, after providing a powder layer, an electromagnetic radiation absorber or suppressor is printed at a position corresponding to the cross section of the object, and the layer is selectively melted by a laser or other ray source or heat source and solidified, and these layers are adhered and laminated to each other to form a model object. Such methods are expected to develop rapidly because they can realize high dimensional accuracy and mechanical strength of a model object.

Conventionally, although polyamide 12 resin powder has been mainly used as a modeling raw material, it has problems with respect to thermal resistance, strength and the like, and has a restriction in development for applications. Further, in recent years, due to the increasing demand for practical applications such as automobiles, the size of model objects has increased, and a technology to suppress the warpage of model objects is also required.

As technologies for obtaining the above-described powder, many technical improvements have been attempted so far. For example, in Patent document 1, a polyamide powder obtained by copolymerizing a semi-crystalline polyamide having a melting enthalpy of 45 J/g or more with a copolymer of polyamide 6I and polyamide 6T is disclosed. Further, in Patent document 2, a copolymerized polyamide obtained by adding 0.1 to 20 parts by weight of a minor component comonomer to a main component monomer and performing anionic polymerization or hydrolytic polycondensation.

<u>Prior art documents</u>

Patent documents

Patent document 1: JP-A-2019-524939
Patent document 2: JP-A-2011-518938

<u>Summary of the Invention</u>

<u>Problems to be solved by the Invention</u>

However, in Patent documents 1 and 2, because the shape of the powder is nonuniform, there is a large difference between the melting point and the melting onset temperature of the polymer powder. Therefore, in a large-sized modeling device which tends to cause a temperature unevenness, the powder form could not be maintained in a laser non-irradiation area. Moreover, it was difficult to suppress warpage of the model object when the polyamide powder was used to make the model object.

Accordingly, an object of the present invention is to provide a polymer powder which can maintain the form of the powder in the laser non-irradiation area even in a large-sized modeling device that tends to cause a temperature unevenness, and to provide a model object with a small warpage when using the polymer powder to make a model object.

<u>Means for solving the Problems</u>

As a result of earnest studies by the present inventors in order to solve the above-described problems, the following invention was achieved. Namely, the present invention is as follows.

[1] A polymer powder comprising a polyamide, characterized in that a melting point determined in differential scanning calorimetry is 190°C or higher, a difference between the melting point and a melting onset temperature determined in differential scanning calorimetry is less than 30°C, and a D50 particle size is 1 $\mu$m or more and 100 $\mu$m or less.

[2] The polymer powder according to [1], wherein a difference between the melting onset temperature and a crystallization onset temperature determined in differential scanning calorimetry is 3°C or more.

[3] The polymer powder according to [1] or [2], wherein a polyamide having a molecular weight of 3,000 or less accounts for 0.4 wt% or less of the total polyamide.

[4] The polymer powder according to any one of [1] to [3], wherein a weight average molecular weight is 40,000 or more.

[5] The polymer powder according to any one of [1] to [4], wherein a weight average molecular weight/a number average molecular weight is 1.8 or less.

[6] The polymer powder according to any one of [1] to [5], wherein a ratio of an amount of carboxylic end groups to an amount of amine end groups of the polyamide is 0.001 or more and 0.8 or less.

[7] The polymer powder according to any one of [1] to [6], wherein a ratio of D90/D10 of a particle size distribution is less than 3.0.

[8] The polymer powder according to any one of [1] to [7], wherein a sphericity is 80 or more.

[9] The polymer powder according to any one of [1] to [8], wherein the polyamide comprises at least one of polyamide 6, polyamide 66, or a copolymer thereof.

[10] The polymer powder according to any one of [1] to [9], wherein a flow aid is contained at 0.01 parts by mass or more and 5 parts by mass or less with respect to 100 parts by mass of the polyamide.

[11] The polymer powder according to any one of [1] to [10], wherein an inorganic reinforcing material is contained at 10 parts by mass or more and 200 parts by mass or less with respect to 100 parts by mass of the polyamide.

[12] A method for producing a polymer powder according to any one of [1] to [9], being a method for producing a polymer powder comprising a polyamide by polymerizing a polyamide monomer in the presence of a polymer incompatible with the polyamide to be obtained, wherein the polyamide monomer and the polymer are uniformly dissolved at the start of polymerization, and the polymerization is performed at a temperature of a crystallization temperature + 20°C or more and a melting point or less of the polyamide to be obtained until a difference between the melting point and a melting onset temperature determined in differential scanning calorimetry of the polyamide to be obtained becomes less than 30°C.

[13] The method for producing a polymer powder according to [12], wherein an end adjuster is added at 0.001 mol% or more and 0.8 mol% or less at the start of polymerization.

[14] A method for producing a 3-dimensional model object by a powder bed fusion method using a polymer powder according to any one of [1] to [11].

Effect according to the Invention

The polymer powder of the present invention can maintain the powder form in the laser non-irradiation area even in a large-sized modeling device in which temperature unevenness tends to occur. Further, a model object with small warpage can be provided when the model object is made using the polymer powder.

Embodiments for carrying out the Invention

Hereinafter, the present invention will be explained in detail together with embodiments.

The polymer powder of the present invention is a polymer powder comprising a polyamide, characterized in that a melting point determined in differential scanning calorimetry is 190°C or higher, a difference between the melting point and a melting onset temperature determined in differential scanning calorimetry is less than 30°C, and a D50 particle size is 1 $\mu$m or more and 100 $\mu$m or less.

In production of a model object by the powder bed fusion method, when the temperature inside the modeling device drops below the crystallization temperature of the polymer powder during the process of obtaining a uniform model object after melting and cooling, since the model object crystallizes and shrinks, a warpage occurs in the model object. In general, as a method for suppressing warpage of model objects, there is a method for using the above-described polymer powder, etc., and setting the modeling temperature to an upper limit temperature at which the polymer powder does not melt, namely, a temperature that is at least 15°C lower than the melting point. However, when the size of the device increases, the temperature inside the modeling device becomes uneven, and some places become high temperature, so it causes that the polymer powder in a laser non-irradiation area melts. For this, it is possible to prevent the polymer powder from melting by further lowering the temperature during modeling, but as the temperature is lowered, the risk of warpage of the model object further increases. Therefore, the warpage of the model object and the melting of the polymer powder in the laser non-irradiation area are in a trade-off relationship in a large-scale modeling, and it is difficult to suppress them at the same time.

The inventors of the present application have found that when a 3-dimensional model object is produced by the powder bed fusion method, if a polymer powder comprising a polyamide, in which a difference between the melting point and the melting onset temperature is in a specific range, is used, the above-described trade-off can be solved, and the form of the polymer powder in the laser non-irradiation area can be maintained and the warpage of the model object to be obtained can be suppressed, thereby reaching the present invention.

The polymer powder in the present invention comprises a polyamide having a structure containing an amide group. As concrete examples of the polyamide, exemplified are polycaproamide (polyamide 6), polyhexamethylene adipamide (polyamide 66), polyhexamethylene terephthalamide (polyamide 6T), polyhexamethylene sebacamide (polyamide 610), polyhexamethylene dodecamide. (polyamide 612), polydecamethylene adipamide (polyamide 106), polydodecamethylene adipamide (polyamide 126), polynonanamide (polyamide 9), polydecamethylene terephthalamide (polyamide 10T), polydecamethylene sebacamide (polyamide 1010), polyundecaneamide (polyamide 11), polydodecamethylene terephthalamide (polyamide 12T), polycaproamide/polyhexamethylene adipamide copolymer (polyamide 6/66), and copolymers thereof. From the viewpoint of thermal resistance during modeling and thermal properties of the model object, polycaproamide (polyamide 6), polyhexamethylene adipamide (polyamide 66), or copolymers thereof are particularly preferred, polycaproamide (polyamide 6) or its copolymers are extremely preferred, and polycaproamide (polyamide 6) is most preferred.

These may be copolymerized as long as the effects of the present invention are not impaired. As a copolymerizable component, an elastomer component such as polyolefin or polyalkylene glycol that imparts flexibility, a rigid aromatic component that improves thermal resistance and strength, and an end adjuster that adjusts terminal groups, can be appropriately selected.

The melting point of the polymer powder in the present invention indicates a temperature at which all the powder melts within the modeling device. The melting point was calculated from the endothermic peak observed when 10 mg of powder was heated in a nitrogen atmosphere at a rate of 20°C/min from 30°C using a differential scanning calorimeter (DSCQ20) supplied by TA Instruments Japan Inc., and the temperature at the peak top was taken as the melting point.

The melting point of the polymer powder of the present invention is 190°C or higher from the viewpoint of thermal resistance of the model object. The lower limit is preferably 200°C or higher, more preferably 205°C or higher, further preferably 210°C or higher, particularly preferably 215°C or higher, significantly preferably 217°C or higher, and most preferably 218°C or higher. From the viewpoint of thermal resistance of the modeling device, the upper limit is preferably 300°C or lower, more preferably 295°C or lower, further preferably 290°C or lower, particularly preferably 285°C or lower, significantly preferably 280°C or lower, and most preferably 260°C or lower.

The melting onset temperature of the polymer powder in the present invention indicates a temperature at which the powder begins to melt even slightly in the modeling device. Conventionally, the melting onset temperature is determined as a temperature at a point of intersection of a tangent line drawn relative to a first inflection point, which is lower than the temperature of the minimum point of the endothermic peak observed when the powder is heated at a constant rate with a differential scanning calorimeter, with a tangent line of a baseline. However, according to the above-described definition, polymer powder with a low melting point contained at a small amount cannot be evaluated. In a large-sized modeling device which uses a large amount of powder, if powder with a low melting point is contained even at a small amount, melting of the powder present in a laser non-irradiation area is caused, and therefore, it is necessary to evaluate a small amount of powder with a low melting point. Accordingly, the melting onset temperature in the present invention is defined as a lowest temperature among temperatures at each of which a first temperature differential value of Heat Flow (W/g) observed between a peak top temperature of an endothermic peak, observed when 10 mg of powder is heated at a rate of 20°C/min from 30°C in a nitrogen atmosphere with a differential scanning calorimeter (DSCQ20) supplied by TA Instruments Japan Inc., and a temperature point of -50°C from the peak top of the endothermic peak, becomes -0.2 (W/g·°C).

The difference between the melting point and the melting onset temperature of the polymer powder of the present invention is less than 30°C. Outside such a range, the melting temperature varies. If the melting temperature varies, the powder with a low melting temperature and the powder with a high melting temperature will coexist in the modeling device. If the temperature of the modeling device is set low in accordance with the powder with a low melting temperature, warpage tends to occur on the model object. Further, if the laser output is set high in accordance with the powder with a high melting temperature, the powder present in a laser non-irradiation area tends to melt. Therefore, if there is a variation in the melting temperature, it is difficult to set the conditions for modeling while suppressing the melting of the powder present in a laser non-irradiation area and the warpage of the model object in a large-sized modeling device which tends to cause a temperature unevenness. The upper limit of the difference between the melting point and the melting onset temperature is preferably 29°C or less, more preferably 28°C or less, particularly preferably 27°C or less, and most preferably 26°C or less. Further, the lower limit is theoretically 0°C.

The D50 particle size of the polymer powder of the present invention is in the range of 1 $\mu$m or more and 100 $\mu$m or less. If the D50 particle size exceeds 100 $\mu$m, the particle size becomes equal to or greater than the thickness of a thin layer formed for modeling, and the surface becomes rough. If the D50 particle size is less than 1 $\mu$m, because it is too fine, the particles easily adhere to a coater or the like during modeling, and the temperature inside the modeling device cannot be raised to a required temperature. The upper limit of the D50 particle size of the polymer powder is preferably 90 $\mu$m or less, more preferably 80 $\mu$m or less, and further preferably 75 $\mu$m or less. The lower limit is preferably 5 $\mu$m or more, more preferably 20 $\mu$m or more, and further preferably 30 $\mu$m or more.

Where, the D50 particle size of the polymer powder is a particle size (D50 particle size) at which the cumulative frequency from the small particle size side of the particle size distribution measured with a laser diffraction particle size distribution analyzer is 50%.

The crystallization onset temperature in the present invention indicates a temperature at which the model object immediately warps if it falls below that temperature in the modeling device. Conventionally, the crystallization onset temperature is determined as a temperature at a point of intersection of a tangent line drawn relative to a first inflection point, which is higher than the temperature of the maximum point of the exothermic peak observed when the powder is cooled at a constant rate with a differential scanning calorimeter, with a tangent line of a baseline. However, according to the above-described definition, polymer powder with a high crystallization temperature, which is contained in a small amount, cannot be evaluated. In a large-sized modeling device which uses a large amount of powder, if powder with a high crystallization temperature is contained even at a small amount, a warpage is caused in the model object, and therefore, it is necessary to evaluate a small amount of powder with a high crystallization temperature. Accordingly, the crystallization onset temperature in the present invention is calculated based on the exothermic peak that appears, when the temperature is raised to a temperature of 50°C higher than the peak top of the endothermic peak observed when the temperature is raised from 30°C at a rate of 20 °C/min under a nitrogen atmosphere using a differential scanning calorimeter (DSCQ20) supplied by TA Instruments Japan Inc., then, held for 1 minute, and cooled to 30°C at a rate of 20 °C/min. A highest temperature is taken as the crystallization onset temperature among the temperatures at each of which a first temperature differential value of Heat Flow (W/g) observed between a peak top temperature of an exothermic peak and a temperature point of +50°C from the peak top of the exothermic peak, becomes -0.1 (W/g·°C).

The difference between the melting onset temperature and the crystallization onset temperature in the present invention is preferably 3°C or more. If the difference between the melting onset temperature and the crystallization onset temperature is small, the temperature condition range that simultaneously suppresses the melting of the powder present in a laser non-irradiation area and the warpage of the model object tends to become narrower. In particular, it may be difficult to set the condition for a large-sized modeling device which varies in temperature. Therefore, the lower limit is preferably 4°C or higher, more preferably 6°C or higher, further preferably 8°C or higher, and particularly preferably 10°C or higher. If the difference between the melting onset temperature and the crystallization onset temperature is large, because it takes time to cool after melting and solidify and the productivity deteriorates, the upper limit is preferably 100°C or lower, more preferably 90°C or lower, further preferably 80°C or lower, particularly preferably 70°C or lower, and most preferably 60°C or lower.

The rate of polyamide having a molecular weight of 3,000 or less in the polyamide forming the polymer powder is preferably 0.4 wt% or less. The less the polyamide with a molecular weight of 3,000 or less, the higher the melting onset temperature and the smaller the difference between the melting point and the melting onset temperature, and therefore, it is preferable because it becomes possible to suppress the melting of the powder present in a laser non-irradiation area and the warpage of the model object. The upper limit is preferably 0.4 wt% or less, more preferably 0.3 wt% or less, and further preferably 0.2 wt% or less. If the amount of the polyamide having a molecular weight of 3,000 or less is small, the viscosity becomes high and the fusion of the powder tends to easily proceed. The lower limit is preferably 0.001 wt% or more, and more preferably 0.005 wt% or more.

The range of the weight average molecular weight of the polyamide is preferably 40,000 or more. The higher the weight average molecular weight, the higher the melting onset temperature and the smaller the difference between the melting point and the melting onset temperature, so the melting of the powder present in a laser non-irradiation area and the warpage of the model object can be suppressed even in a large-sized modeling device which tends to cause a temperature unevenness, and it is preferred. Further, in the powder bed fusion method, a part of the polymer powder used is used to create a model object, and a large amount of polymer powder remains. It is important from the viewpoint of cost to reuse the remaining polymer powder. For this, it become important not to change the properties of the polymer powder during the heating and modeling process. Because the higher the weight average molecular weight of polyamide, the smaller the amount of end groups and the smaller the amount of change in molecular weight before and after modeling, the lower limit of the weight average molecular weight is preferably 40,000 or more, more preferably 46,000 or more, further preferably 50,000 or more, particularly preferably 60,000 or more, significantly preferably 70,000 or more, and most preferably 74,000 or more. If the molecular weight is too high, the viscosity becomes high and the fusion of the powder tends to proceed, so it is preferably 800,000 or less, more preferably 500,000 or less, and particularly preferably 300,000 or less.

The molecular weight distribution index of polyamide is represented by weight average molecular weight/number average molecular weight, which is the ratio of weight average molecular weight to number average molecular weight, and is preferably 1.8 or less. The smaller the molecular weight distribution index, the smaller the difference between the melting point and the melting onset temperature, and the melting temperature does not vary, so the melting of the powder present in a laser non-irradiation area and the warpage of the model object can be suppressed even in a large-sized modeling device which tends to cause a temperature unevenness, and it is preferred. Therefore, the molecular weight distribution index of polyamide is preferably 1.7 or less, more preferably 1.6 or less, and further preferably 1.5 or less. Further, the lower limit is theoretically 1.

Where, the weight average molecular weight and the number average molecular weight of polyamide indicate a weight average molecular weight and a number average molecular weight obtained by converting the values measured by gel permeation chromatography using hexafluoro isopropanol as a solvent into the values of polymethyl methacrylate.

The amount of carboxylic end groups and the amount of amine end groups of polyamide are each preferably $9.5 \times 10^{-5}$ mol/g or less. If the amount of carboxylic end groups and the amount of amino end groups become small, the amount of change in molecular weight before and after modeling becomes small when the powder is reused, which is preferred. The amount of carboxylic end groups and the amount of amino end groups are each preferably $8.5 \times 10^{-5}$ mol/g or less, more preferably $6.5 \times 10^{-5}$ mol/g or less, and further preferably $3.0 \times 10^{-5}$ mol/g or less. On the other hand, if the amount of carboxylic end groups and the amount of amino end groups become small, because the adhesiveness with inorganic reinforcing materials decreases, it is necessary to maintain a certain amount or more of functional groups. The amount of carboxylic end groups and the amount of amino end groups are each preferably $1.0 \times 10^{-9}$ mol/g or more, more preferably $1.0 \times 10^{-8}$ mol/g or more, and further preferably $1.0 \times 10^{-7}$ mol/g or more.

Where, the amount of carboxylic end groups of the polyamide is determined by dissolving the polymer powder in benzyl alcohol and then performing neutralization titration with an ethanol solution of potassium hydroxide, and the amount of amino end groups of the polyamide is determined by dissolving the polymer powder in P.E.A (phenol/ethanol solvent) and then performing neutralization titration with an aqueous solution of hydrochloric acid.

As a method for reducing the amount of carboxylic end groups and the amount of amine end groups, in addition to a method of using high molecular weight polymer powder, there is a method of adding monoamines which are monofunctional end adjusters such as hexylamine, octylamine and aniline, or monocarboxylic acids such as acetic acid, hexanoic acid, lauric acid, stearic acid and benzoic acid, when polymerizing polyamide monomers. Further, in case where amino acids or lactams are used as polyamide monomers, there is a method in which, other than monofunctional end adjusters, diamines such as hexamethylenediamine and phenylenediamine, which are bifunctional end adjusters, or dicarboxylic acids such as terephthalic acid and adipic acid, are added. The end adjuster to be added is preferably a monocarboxylic acid such as acetic acid, hexanoic acid, lauric acid, stearic acid and benzoic acid from the viewpoint of not damaging the polymerization reaction, obtaining a polyamide with a high molecular weight, and being able to suppress coloring, and an aromatic monocarboxylic acid such as benzoic acid is more preferred. Further, in case where diamines or dicarboxylic acids are used as polyamide monomers, the amount of end groups can be reduced by adjusting the charging ratio thereof.

When the powder is reused, because the amount of change in molecular weight before and after modeling is further reduced, it is preferred that the ratio of the amount of carboxylic end groups and the amount of amine end groups of polyamide is small. The ratio of the amount of carboxylic end groups and the amount of amine end groups of polyamide indicates a value obtained by dividing the smaller amount of functional groups by the larger amount of functional groups in the amount of carboxylic end groups and the amount of amine end groups of polyamide. The smaller the amount of amine end groups, the more preferable because the change in color tone of the powder before and after modeling can be suppressed. The ratio of the amount of carboxylic end groups and the amount of amine end groups of polyamide is preferably 0.8 or less. The ratio of the amount of carboxylic end groups and the amount of amine end groups of polyamide is preferably 0.7 or less, more preferably 0.6 or less, further preferably 0.4 or less, and most preferably 0.3 or less. On the other hand, particles with a small ratio of carboxylic end groups and amine end groups of polyamide have a small molecular weight, causing a melting of the powder present in a laser non-irradiation area and a warpage of the model object. The ratio of the amount of carboxylic end groups and the amount of amine end groups of polyamide is preferably 0.001 or more, and more preferably 0.01 or more.

Since the polymer powder of the present invention has a small amount of carboxylic end groups and a small amount of amine end groups, and the ratio of the amount of carboxylic end groups and the amount of amine end groups of polyamide is small, it has the effect that the molecular weight does not change even in performing modeling using reused powder. The index thereof can be evaluated by calculating the ratio of change in molecular weight before and after modeling.

The ratio of change in molecular weight before and after modeling in the present invention indicates how much the molecular weight of the polyamide changes after the test piece is modeled when the test piece is modeled using a large-sized modeling device.

The ratio of change in molecular weight before and after modeling in the present invention is preferably in the range of 0.8 or more and less than 1.6 when modeling is performed for 5 hours or longer with a large-sized modeling device. If it is out of this range, the change in molecular weight of the polyamide before and after modeling becomes large, which is not preferable for reusing the powder. The upper limit of the ratio of change in molecular weight before and after modeling is preferably less than 1.5, and more preferably less than 1.4. The lower limit is preferably 0.85 or more, and more preferably 0.90 or more.

The ratio of change in molecular weight before and after modeling is calculated as a ratio of a weight average molecular weight of the polyamide that forms the polymer powder after modeling (Mw. of the polyamide after modeling) to a weight average molecular weight of the polyamide that forms the polymer powder before modeling (Mw. of the polyamide before modeling). Mw. of the polyamide after modeling is calculated by measuring a modeled powder remaining in a modeling device after molding a test piece by gel permeation chromatography using hexafluoro isopropanol as a solvent, and converting the obtained value into a value of polymethyl methacrylate.

[Equation 1]

Ratio of change in molecular weight before and after modeling =

Mw. of polyamide after modeling/ Mw. of the polyamide before modeling

The particle size distribution index of the polymer powder is represented as D90/D10, which is the ratio of D90 to D10 of the particle size distribution, and is preferably less than 3.0. The smaller the particle size distribution index, the smaller the difference between the melting point and the melting onset temperature, and since a variation in melting temperature does not occur, it is preferred because it can suppress the melting of the powder present in a laser non-irradiation area and the warpage of the model object even in a large-sized modeling device which tends to cause a temperature unevenness. Therefore, D90/D10 is preferably less than 2.8, more preferably less than 2.6, and further preferably less than 2.4. Further its lower limit is theoretically 1.

D90/D10, which is the particle size distribution index of the polymer powder in the present invention, is a value determined by dividing the particle size (D90) at which the cumulative frequency from the small particle size side of the particle size distribution measured by the aforementioned laser diffraction particle size distribution analyzer becomes 90% by the particle size (D10) at which the cumulative frequency from the small particle size side becomes 10%.

The sphericity, which indicates the sphericalness of the polymer powder of the present invention, is preferably 80 or more. If the sphericity is high, since the difference between the melting point and the melting onset temperature becomes small, and variation in melting temperature does not occur, it is preferred because it can suppress the melting of the powder present in a laser non-irradiation area and the warpage of the model object even in a large-sized modeling device which tends to cause a temperature unevenness. The sphericity is preferably 85 or more, more preferably 90 or more, and further preferably 95 or more. Further, its upper limit is 100.

Where, the sphericity of the polyamide powder is calculated by observing 30 particles at random from a scanning electron microscope photograph and calculating an average value of the ratio of the minor axis to the major axis of each particle.

[Equation 2]

$$S = \left[ \sum_{i=1}^{n} (b/a) \right] \times 100/n$$

In the above-described equation, S: sphericity, a: major axis, b: minor axis, n: number of measurements 30.

The polymer powder of the invention may contain a flow aid. The flow aid is preferably dry blended with the polymer powder. In the present invention, the flow aid indicates a substance which suppresses aggregation of polymer powder due to the adhesive force between polymer powders. By containing the flow aid, the flowability of the polymer powder can be improved, and an unevenness in filling of polymer powder does not occur when the polymer powder is made into a model object. As a result, the warpage of the resulting model object becomes smaller.

As such a flow aid, for example, exemplified are silica (silicon dioxide) such as fused silica, crystalline silica, and amorphous silica, alumina such as alumina (aluminum oxide), alumina colloid (alumina sol), and alumina white, calcium carbonate such as light calcium carbonate, heavy calcium carbonate, micronized calcium carbonate, and special calcium carbonate-based filler, calcined clay such as nepheline syenite fine powder, montmorillonite, and bentonite, clay (aluminum silicate powder) such as silane modified clay, silicic acid-containing compounds such as talc, diatomaceous earth, and silica sand, pulverized natural minerals such as pumice powder, pumice balloon, slate powder, and mica powder, minerals such as barium sulfate, lithopone, calcium sulfate, molybdenum disulfide, and graphite, glass-based fillers such as glass fibers, glass beads, glass flakes, and foamed glass beads, fly ash spheres, volcanic glass hollow materials, synthetic inorganic hollow materials, single crystal potassium titanate, carbon fibers, carbon nanotubes, carbon hollow spheres, fullerenes, anthracite powder, artificial cryolite (cryolite), titanium oxide, magnesium oxide, basic magnesium carbonate, dolomite, potassium titanate, calcium sulfite, mica, asbestos, calcium silicate, molybdenum sulfide, boron fibers, silicon carbide fibers, etc. Silica, alumina, calcium carbonate powder, glass-based filler, and titanium oxide are more preferred. Particularly preferably, silica is exemplified.

As commercially available products of such a silica, exemplified are fumed silica "AEROSIL" (registered trademark) series supplied by NIPPON AEROSIL Co., Ltd., dry silica "Reolosil" (registered trademark) series supplied by Tokuyama Corporation, sol-gel silica powder X-24 series supplied by Shin-Etsu Chemical Co., Ltd., etc.

D50 particle size of such a flow aid is preferably 20 nm or more and 1 $\mu$m or less. The upper limit of the D50 particle size of the flow aid is preferably 1 $\mu$m or less, because a smaller particle size and a larger surface area can suppress aggregation of the resin powder with a smaller amount. It is more preferably 500 nm or less, further preferably 400 nm or less, particularly preferably 300 nm or less, and extremely preferably 250 nm or less. The lower limit is preferably 20 nm or more because if the surface area is too large, the filling property is hindered and warpage occurs in the model object. It is more preferably 30 nm or more, further preferably 50 nm or more, and particularly preferably 100 nm or more. When the average particle size of the flow aid is within the above-described range, the flowability of the polymer powder can be improved and it tends to be able to disperse the flow aid uniformly in the polymer powder.

The D50 particle size of the flow aid in the present invention is a particle size (D50 particle size) at which the cumulative frequency from the small particle size side of the particle size distribution measured with a laser diffraction particle size distribution analyzer becomes 50%.

The compounding amount of such a flow aid is 0.01 parts by mass or more and 5 parts by mass or less with respect to 100 parts by mass of polyamide. The upper limit of the compounding amount is preferably 4 parts by mass or less, more preferably 3 parts by mass or less, further preferably 2 parts by mass or less, and particularly preferably 1 part by mass or less. Further, the lower limit of the compounding amount is preferably 0.02 parts by mass or more, more preferably 0.03 parts by mass or more, further preferably 0.05 parts by mass or more, and particularly preferably 0.1 parts by mass or more. If the compounding amount of the flow aid is less than 0.01 part by mass, the flowability is insufficient, and warpage is likely to occur in the resulting model object. If the compounding amount of the flow aid exceeds 5 parts by mass, the surface of the resin powder is covered with the flow aid, which impedes sintering, and a model object cannot be obtained.

The polymer powder in the present invention may contain an inorganic reinforcing material composed of an inorganic compound. The inorganic reinforcing material may be dry-blended with the polymer powder or contained inside the polymer powder, but it is preferably dry-blended from the viewpoint of controlling the polymer powder in a spherical form and improving the flowability.

As such an inorganic reinforcing material, for example, exemplified are glass fillers such as glass fibers, glass beads, glass flakes, and foamed glass beads, calcined clays such as nepheline syenite fine powder, montmorillonite, and bentonite, and clays (aluminum silicate powder) such as silane modified clays, silicic acid-containing compounds such as talc, diatomaceous earth, and silica sand, pulverized natural minerals such as pumice powder, pumice balloon, slate powder, and mica powder, minerals such as barium sulfate, lithopone, calcium sulfate, molybdenum disulfide, and graphite, silica (silicon dioxide) such as fused silica, crystalline silica, and amorphous silica, alumina such as alumina (aluminum oxide), alumina colloid (alumina sol), and alumina white, calcium carbonate such as light calcium carbonate, heavy calcium carbonate, micronized calcium carbonate, and special calcium carbonate-based filler, fly ash spheres, volcanic glass hollow materials, synthetic inorganic hollow materials, single crystal potassium titanate, potassium titanate fibers, carbon fibers, carbon nanotubes, carbon hollow spheres, fullerene, anthracite powder, cellulose nanofibers, artificial cryolite (cryolite), titanium oxide, magnesium oxide, basic magnesium carbonate, dolomite, calcium sulfite, mica, asbestos, calcium silicate, molybdenum sulfide, boron fibers, silicon carbide fibers, and the like. Glass-based fillers, minerals, and carbon fibers are preferable because they are hard and have a large strength-enhancing effect, and glass-based fillers are more preferable because they have a narrow particle size distribution and a narrow fiber diameter distribution. These inorganic reinforcing materials can be used alone or in combination of two or more.

As examples of glass-based fillers preferably used in the present invention, glass fibers, glass beads, glass flakes, and foamed glass beads are exemplified, but glass fibers and glass beads are particularly preferred from the viewpoint capable of suppressing the warpage of a 3-dimensional model object. Among these, glass fibers are significantly preferable, and the glass fibers may have a circular cross section or a flat cross section. Further, glass beads are remarkably preferable because the warpage anisotropy of the model object is small.

For the purpose of improving the adhesion between the inorganic reinforcing material and the polymer powder, it is possible to use a surface-treated inorganic reinforcing material within the range that does not impair the effects of the present invention. As examples of such surface treatments, silane coupling agents such as amino silane, epoxy silane, and acrylic silane can be exemplified. These surface treatment agents may be immobilized on the surface of the inorganic reinforcing material by a coupling reaction, or may coat the surface of the inorganic reinforcing material, but in view of being difficult to be modified by heat or the like, those immobilized by a coupling reaction are preferable.

The average major axis diameter of the inorganic reinforcing material in the present invention is preferably in the range of 3-300 μm. If the average major axis diameter exceeds 300 μm, the filling of the polymer powder becomes uneven when the model object is formed, and warpage occurs in the model object, which is not preferable. If the average major axis diameter is less than 3 μm, it cannot contribute to suppress warpage, which is not preferable. The upper limit of the average major axis diameter of the inorganic reinforcing material is preferably 250 μm or less, more preferably 200 μm or less, further preferably 150 μm or less, and particularly preferably 100 μm or less. The lower limit is preferably 5 μm or more, more preferably 8 μm or more, and further preferably 10 μm or more.

The characteristic of the shape of the inorganic reinforcing material of the present invention is represented by average major axis diameter/average minor axis diameter, which is the ratio of average major axis diameter to average minor axis diameter, and it is preferably 1 or more and 15 or less. If the average major axis diameter/average minor axis diameter exceeds 15, the orientation in the X direction in the model object becomes conspicuous and the warpage anisotropy with the Z direction increases, which is not preferable. Therefore, the average major axis diameter/average minor axis diameter is preferably 12 or less, more preferably 10 or less, and further preferably 8 or less. Further, the lower limit is theoretically 1. Among these, from the viewpoint of increasing the strength, it is particularly preferably 2 or more and 8 or less, and extremely preferably 3 or more and 8 or less. From the viewpoint of reducing the anisotropy, it is particularly preferably 1 or more and 5 or less, and extremely preferably 1 or more and 3 or less.

Where, in the present invention, the average major axis diameter and average minor axis diameter of the inorganic reinforcing material are number average values of major axis diameters and minor axis diameters observed from 100 fibers or particles randomly selected from a photograph obtained by imaging the inorganic reinforcing material with a scanning electron microscope. The major axis diameter is a diameter at which the distance between the parallel lines when the image of the particle is sandwiched between two parallel lines becomes the maximum, and the minor axis diameter is a diameter that minimizes the distance between parallel lines when sandwiched between two parallel lines in a direction perpendicular to the direction of the major axis diameter.

The compounding amount of such an inorganic reinforcing material is preferably 10 parts by mass or more and 200 parts by mass or less with respect to 100 parts by mass of the polyamide. The upper limit of the compounding amount is more preferably 150 parts by mass or less, further preferably 100 parts by mass or less, and particularly preferably 75 parts by mass or less from the viewpoint capable of obtaining a model object without warpage without deteriorating the flowability of the polymer powder. Further, the lower limit of the compounding amount is more preferably 15 parts by mass or more, further preferably 20 parts by mass or more, and particularly preferably 25 parts by mass or more from the viewpoint capable of suppressing the warpage of the model object.

Further, it may contain also other additives. As the other additives, for example, for improving the stability of the polymer powder, antioxidants, thermal stabilizers, exemplified are weather-proofing agents, lubricants, pigments, dyes, plasticizers, antistatic agents, flame retardants, carbon black, titanium dioxide, etc.

The effect of the polymer powder of present invention is in a point that it can suppress the melting of the powder present in a laser non-irradiation area and the warpage of the model object even in a large-sized modeling device that tends to cause temperature unevenness. The index thereof can be evaluated by calculating the melting degree of the powder present in a laser non-irradiation area and the warpage amount of the model object obtained from a large-sized modeling device when using the large-sized modeling device.

The above-described melting degree of the powder present in a laser non-irradiation area when using a large-sized modeling device indicates a weight ratio at which the laser non-irradiation area powder melts when the test piece is modeled for 5 hours or more using the large modeling device.

In the present invention, the melting degree of the powder present in a laser non-irradiation area when using a large-sized modeling device is preferably 30 wt% or less. It is preferable that the melting degree of the laser non-irradiation area powder is as small as possible because a desired model object can be obtained without causing melting of the powder present in the laser non-irradiation area, and the upper limit thereof is preferably 20 wt% or less, and further preferably 5 wt% or less. Further, the lower limit thereof is theoretically 0 wt%.

The melting degree of the powder present in a laser non-irradiation area when using a large-sized modeling device was determined by taking 100g of the powder remaining in the modeling device after modeling the test piece for 5 hours or more with the large-sized modeling device and pulverizing it with a mortar and pestle, and determining it as the ratio of the weight W of the powder remaining on the sieve when passed through a 500 μm sieve.

[Equation 3]

$$\text{Melting degree of laser non-irradiation area powder} = (W/100) \times 100$$

The amount of warpage of the model object obtained from the large-sized modeling device described above indicates an amount of warpage actually generated in the test piece when modeling the test piece for 5 hours or more with the large-sized modeling device.

The above-described amount of warpage of the model object obtained from the large-sized modeling device (measurement and evaluation methods will be described later) is preferably 0.3 mm/10 cm or less. If the amount of warpage of the model object is greater than 0.3 mm/10 cm, the occurrence of warpage becomes significant, and a desired model object cannot be obtained. It is preferred that the amount of warpage of the model object is as small as possible because a desired model object can be obtained without warpage, and the upper limit is more preferably 0.2 mm/10 cm or less, further preferably 0.1 mm/10 cm or less, and particularly preferably 0.05 mm/10 cm or less. Further, the lower limit is theoretically 0.0 mm/10 cm.

The above-described amount of warpage of the model object when using the large-sized modeling device is measured by placing the obtained test piece on a horizontal surface in a convex state toward upper side after molding the test piece for 5 hours or more, and inserting a taper gauge into the gap between the horizontal surface and the test piece.

The method for producing the polymer powder of the present invention is not restricted, but preferably, a method described in International Publication WO2018/207728 previously disclosed by the present inventors can be used wherein the polyamide monomer of the present application is polymerized in the presence of a polymer incompatible with the polyamide to be obtained, and the polymer powder comprising the polyamide is washed and dried. At that time, it has been found to be able to produce a polymer powder which does not vary in melting temperature, and which hardly causes melting of the powder present in a laser non-irradiation area and warpage of the model object even in a large-sized modeling device that tends to cause a temperature unevenness, by performing the polymerization at a polymerization temperature of the crystallization temperature + 20°C or more and the melting point or less of the polyamide to be obtained until the difference between the melting point and the melting onset temperature of the polyamide to be obtained determined in differential scanning calorimetry becomes less than 30°C.

From the viewpoint of suppressing the formation of polyamide with a low molecular weight in the polymer powder and reducing the difference between the melting onset temperature and the crystallization onset temperature, the polymerization temperature is preferably the crystallization temperature of the polyamide to be obtained +20°C or higher, more preferably +25°C or higher, and further preferably +30°C or higher. From the viewpoint of preventing the difference between the melting onset temperature and the crystallization onset temperature from increasing due to an increase in the molecular weight distribution index due to the progress of the side reaction of the polyamide such as a three-dimensional crosslinked product, the polymerization temperature is preferably the melting point of the polyamide to be obtained or less, more preferably the melting point -3°C or less, and further preferably the melting point -5°C or less. Where, the melting point and the crystallization temperature of the polyamide are determined using a differential scanning calorimeter (DSCQ20) supplied by TA Instruments Japan Inc., by taking a peak top temperature of the endothermic peak observed when elevating the temperature from 30°C at a rate of 20 °C/min under a nitrogen atmosphere as the melting point, and taking a peak top temperature of the exothermic peak that appears when elevating the temperature to 50°C higher than the melting point, maintaining the temperature for 1 minute, and then cooling to 30°C at a rate of 20 °C/min as the crystallization temperature.

The polymerization is performed until the difference between the melting point and the melting onset temperature of the polyamide to be obtained determined in differential scanning calorimetry becomes less than 30°C, in order to produce particles that can suppress melting of the powder present in a laser non-irradiation area and warpage of the model object in a large-sized modeling device which tends to cause a temperature unevenness. If the difference between the melting point and the melting onset temperature exceeds 30°C, because the melting temperature varies, in a large-sized modeling device which tends to cause a temperature unevenness, melting of the powder present in a laser non-irradiation area and warpage of the model object are likely to occur. The polymerization is preferably performed until the difference between the melting point and the melting onset temperature becomes 29°C or less, more preferably 28°C or less, particularly preferably 27°C or less, and most preferably 26°C or less.

Furthermore, in the polymer powder obtained by the production method of the present invention, it has been clarified that the molecular weight distribution index of the polyamide becomes smaller and that the difference between the melting point and the melting onset temperature in the differential scanning calorimetry of the obtained polyamide becomes smaller, because the polymerization reaction proceeds in a small and uniform emulsion, and there is no variation in polymerization behavior within or between emulsions. Since there is no variation in the melting temperature, even in a large-sized modeling device which tends to cause a temperature unevenness, melting of the powder present in a laser non-irradiation area and warpage of the model object can be suppressed, which is preferable.

Next, the method for producing the polymer powder of the present invention will be described in detail.

As the method for producing the polymer powder, a method can be preferably used wherein the polymerization is performed in the presence of a polymer incompatible with the polyamide from which the polyamide monomer is obtained, at a temperature of a crystallization temperature + 20°C or more and a melting point or less of the polyamide to be obtained until the difference between the melting point and the melting onset temperature determined in differential scanning calorimetry of the polyamide to be obtained becomes less than 30°C, thereby producing the polymer powder. In this method, the polyamide monomer and the polymer incompatible with the polyamide to be obtained are uniformly dissolved at the start of the polymerization, and after the polymerization, the polymer powder having the desired melting point, melting onset temperature, and particle size can be produced.

Further preferably, no organic solvent is used in the production process. By this, it is possible to suppress powder fusion and the like originating from the organic solvent which cannot be completely removed in a washing or drying process. In particular, an organic solvent having a high boiling point of 100°C or higher is not preferred because it becomes difficult to remove.

In order to determine whether the polyamide monomer at the start of polymerization is uniformly dissolved in the polymer incompatible with the polyamide to be obtained, it is visually confirmed that the reaction vessel is a transparent solution. If it is in a suspension state or a state separated into two phases at the start of polymerization, it indicates that the polyamide monomer and the polymer incompatible with the polyamide to be obtained are incompatible, and generation, strong stirring, or the like of aggregates is required. In this case, water may be used to create a condition where the polyamide monomer and the polymer incompatible with the polyamide to be obtained are made uniform, and then the polymerization may be started. Whether or not the polymer powder is deposited after polymerization is determined by visually confirming that the reaction vessel is a suspension. A uniform solution at the end of the polymerization indicates that the polyamide and the polymer incompatible with the polyamide to be obtained are uniformly dissolved, and it becomes aggregates or porous powder by cooling or the like.

As examples of concrete polyamide monomers in the method for producing the polymer powder, exemplified are amino acids such as amino hexanoic acid, 9-amino pelargonic acid, and 11-amino undecanoic acid, lactams such as ε-caprolactam, dicarboxylic acids such as oxalic acid, succinic acid, adipic acid, terephthalic acid, isophthalic acid, 1,4-cyclohexane dicarboxylic acid and 1,3-cyclohexane dicarboxylic acid, diamines such as ethylene diamine, trimethylene diamine, tetramethylene diamine, pentamethylenediamine, hexamethylene diamine, 1,4-cyclohexane diamine and 1,3-cyclohexane diamine, and mixtures and salts thereof each selected therefrom. These polyamide monomers may be used in combination of two or more as long as they do not impair the present invention, and may contain other copolymerizable components.

Among them, ε-Caprolactam, amino hexanoic acid, adipic acid and hexamethylene diamine are particularly preferred from the viewpoint of thermal resistance during modeling of the obtained polymer powder and thermal properties of the model object.

As the copolymerizable component, an elastomer component such as polyolefin or polyalkylene glycol that imparts flexibility, or a rigid aromatic component that improves thermal resistance and strength, or the like, can be appropriately selected. Further, an end adjuster that adjusts the end groups for reusing the polymer powder in the powder bed fusion method can also be appropriately selected.

It is preferred to add an end adjuster from the viewpoint of suppressing a change in molecular weight when modeling is performed with the obtained polymer powder, and the end adjuster is properly used depending on the polyamide monomer. When dicarboxylic acids and diamines are used as polyamide monomers, it is preferred to add a monofunctional end adjuster. As the monofunctional end adjusters, monoamines such as hexylamine, octylamine and aniline, and monocarboxylic acids such as acetic acid, hexanoic acid, lauric acid, stearic acid and benzoic acid.

In case where amino acids or lactams are used as polyamide monomers, bifunctional end adjusters can be used in addition to monofunctional end adjusters. As the bifunctional end adjusters, exemplified are diamines such as hexamethylene diamine and phenylene diamine, and dicarboxylic acids such as terephthalic acid and adipic acid.

As preferred end adjusters, from the viewpoint capable of obtaining a high-molecular weight polyamide without hindering increase in molecular weight and suppressing agglomeration in any case of a case where dicarboxylic acids or diamines are used as polyamide monomers and a case where amino acids or lactams are used as polyamide monomers, it is preferred to add a monofunctional end adjuster such as acetic acid, hexanoic acid, lauric acid, stearic acid or benzoic acid, and an aromatic monocarboxylic acid such as benzoic acid is more preferred.

The amount of the monofunctional and bifunctional end adjusters is preferably 0.001 mol% or more and 0.8 mol% or less with respect to the total substance amount of the polyamide monomers to be added. If the amount of the added substance is more than 0.8 mol%, the molecular weight of the polyamide cannot be increased, the difference between the melting point and the melting onset temperature becomes small, and in a large-sized modeling device which tends to cause a temperature unevenness, it becomes difficult to maintain the form of the powder present in a laser non-irradiation area and provide a model object small in warpage when making a model object using the polymer powder, which is not preferred. Further, the polyamide is not formed as spherical particles and it is made as an agglomeration. If the amount of the end adjuster is less than 0.001 mol%, the amount of end groups cannot be reduced, and the molecular weight changes before and after modeling, which is not preferred. The upper limit of the substance amount of the end adjuster is preferably 0.5 mol% or less, and more preferably 0.2 mol% or less, with respect to the total substance amount of the polyamide monomers to be added. The lower limit of the substance amount of the end adjuster is preferably 0.005 mol% or more, and more preferably 0.01 mol% or more, with respect to the total substance amount of the polyamide monomers to be added.

The polymer incompatible with the polyamide obtained in the production method of the polymer powder is a polymer which is compatible with the polyamide monomer at the start of the polymerization, but is incompatible with the polyamide after the polymerization.

More specifically, the polymer incompatible with the polyamide to be obtained is preferably non-reactive with the polyamide monomer from the viewpoint of precipitating polymer powder from a uniform solution. Concretely, the polymer incompatible with the polyamide to be obtained does not have a polar group which reacts with the carboxylic group or the amino group that forms the amide group contained in the polyamide, or has a polar group which is low in reactivity with the carboxylic group or the amino group. As the polar groups which react with carboxylic groups or the amino groups, exemplified are amino groups, carboxylic groups, epoxy groups, and isocyanate groups. As the polar groups which are low in reactivity with the carboxylic groups or the amino groups, hydroxyl groups and hydrosulfur groups are exemplified, among which hydroxyl groups are most preferred. For these, from the viewpoint of suppressing a cross-linking reaction, the number of polar groups in the polymer incompatible with the polyamide to be obtained is preferably 4 or less, more preferably 3 or less, and most preferably 2 or less.

As concrete examples of such polymers incompatible with the polyamide to be obtained, exemplified are polyethylene glycol, polypropylene glycol, polytetramethylene glycol, polypentamethylene glycol, polyhexamethylene glycol, polyethylene glycol-polypropylene glycol copolymer, polyethylene glycol-polytetramethylene glycol copolymer, and alkyl ethers blocked with hydroxyl groups present at one or both ends of these with methyl group, ethyl group, propyl group, isopropyl group, butyl group, hexyl group, octyl group, decyl group, dodecyl group, hexadecyl group, octadecyl group or the like, and alkylphenyl ethers blocked with octylphenyl group or the like. In particular, from the viewpoint of excellent compatibility with the polyamide monomer, polyethylene glycol, polyethylene glycol-polypropylene glycol copolymer, polypropylene glycol, polytetramethylene glycol, and alkyl ethers thereof are preferred, and from the viewpoint of also excellent compatibility with water used in ring-opening polymerization by hydrolysis of the polyamide monomer, polyethylene glycol, polyethylene glycol-polypropylene glycol copolymer, and alkyl ethers thereof are further preferred, and polyethylene glycol is most preferred. Two or more of these may be used at the same time as long as they do not impair the present invention.

The preferable upper limit of the weight average molecular weight of the polymer incompatible with the polyamide to be obtained is 200,000. If the weight average molecular weight is large, it becomes difficult to remove the polymer incompatible with the polyamide to be obtained, and fusion of the powder present in a laser non-irradiation area tends to occur, and therefore, it is more preferably 100,000 or less, further preferably 50,000 or less, and particularly preferably 30,000 or less. If the molecular weight is 1,000 or less, the fusion of particles in the polymerization process cannot be suppressed, and fine powder cannot be produced, and from such a viewpoint, the weight average molecular weight of the polymer incompatible with the polyamide to be obtained is preferably 4,000 or more, more preferably 5,000 or more.

After mixing these polyamide monomers with the polymer incompatible with the polyamide to be obtained to obtain a uniform solution, the polymer powder is produced by initiating polymerization at a polymerization temperature of the crystallization temperature + 20°C or higher and the melting point or lower of the polyamide obtained by polymerizing the polyamide monomer. At this time, as the polyamide monomer is converted to polyamide in the uniform mixed solution, the polymer powder is homogeneously induced without being crystallized, and therefore, after the polymerization, a polyamide powder, which is spherical and solid, good in surface smooth ness, and small in particle size distribution index, precipitates.

From the viewpoint of preventing the formation of a large amount of aggregates, etc. because the particle formation occurs from an early stage of the polymerization while the polymerization rate is moderate and a phase separation induced together with the polymerization occurs and particle formation occurs smoothly, the mass ratio at compounding of the polyamide monomer and the polymer incompatible with the polyamide to be obtained during polymerization is preferably in a range of 5/95 to 95/5. The lower limit of the mass ratio of the polyamide monomer/the polymer incompatible with the polyamide to be obtained is more preferably 10/90, further preferably 20/80, and most preferably 30/70. On the other hand, the upper limit of the mass ratio of the polyamide monomer/the polymer incompatible with the polyamide to be obtained is more preferably 90/10, further preferably 80/20, and particularly preferably 70/30.

A known method can be used as a method for polymerizing the polyamide monomer into the polyamide. The method depends on the kind of polyamide monomer, but in the case of lactams, anionic ring-opening polymerization using an alkali metal such as sodium or potassium, or an organometallic compound such as butyl lithium or butyl magnesium as the initiator, cationic ring-opening polymerization using an acid as the initiator, hydrolytic ring-opening polymerization using water or the like, etc. are generally used. Because the polymerization can be carried out at a temperatures of the crystallization temperature +20°C or higher and the melting point or lower of the polyamide, from which a polyamide powder spherical and smooth in surface can be easily obtained, the cationic ring-opening polymerization and the hydrolytic ring-opening polymerization are preferred, and from the viewpoint of suppressing the coloring of the polyamide by the initiator and the gelation and decomposition reaction due to the cross-linking reaction in the polymerization at a temperature of the crystallization temperature +20°C or higher and the melting point or lower of the polyamide to be obtained, the hydrolytic ring-opening polymerization is more preferred. Although the method for ring-opening polymerization of lactams by hydrolysis is not restricted as long as it is a known method, a method for pressurizing in the presence of water, producing an amino acid while promoting hydrolysis of the lactam, and then, performing ring-opening polymerization and polycondensation reaction while removing water is preferred.

In this case, since the polycondensation reaction does not occur if water is present, the polymerization starts at the same time as the water is discharged out of the reactor system. Therefore, the amount of water to be used is not particularly limited as long as the hydrolysis of lactams proceeds, usually the amount of water used is preferably 100 parts by mass or less when the total amount of the polyamide monomer and the polymer incompatible with the polyamide to be obtained is referred to as 100 parts by mass. The amount of water used is more preferably 70 parts by mass or less, further preferably 50 parts by mass or less, and particularly preferably 30 parts by mass or less, in order to improve the production efficiency of the polymer powder. In order to prevent the hydrolysis reaction of lactams from not proceeding, the lower limit of the amount of water used is preferably 1 part by mass or more, more preferably 2 parts by mass or more, further preferably 5 parts by mass or more, and particularly preferably 10 parts by mass or more. As the method for removing water (condensation water) generated by condensation during polycondensation, a known method such as a method of removing while flowing an inert gas such as nitrogen at a normal pressure or a method of removing by reducing pressure can be appropriately used.

Further, in case where the polyamide monomer is an amino acid, a dicarboxylic acid and a diamine, or a salt thereof, a polycondensation reaction can be used as the polymerization method. On the other hand, when these are polyamide monomers, there exist combinations that are not dissolved uniformly with the polymers incompatible with the polyamide to be obtained. In such a polyamide monomer and a polymer incompatible with the polyamide to be obtained, it becomes possible to produce a polymer powder by further adding water to the polyamide monomer and the polymer incompatible with the polyamide to be obtained.

When referring the total amount of the amino acid or the dicarboxylic acid and the diamine, and the polymer incompatible with the polyamide to be obtained to as 100 parts by mass, the amount of water used is preferably 5 to 200 parts by mass. From the viewpoint of preventing the particle size from becoming coarse, the amount of water used is more preferably 150 parts by mass or less, and further preferably 120 parts by mass or less. On the other hand, from the viewpoint of ensuring that water functions as a solvent, the amount of water used is more preferably 5 parts by mass or more, and further preferably 10 parts by mass or more.

Although two or more kinds of lactams and amino acids and/or dicarboxylic acids and diamines may be mixed and used, in this case, water functions as hydrolysis or solvent.

The polymerization time can be appropriately adjusted in accordance with the molecular weight of the polyamide to be obtained, and it is preferably in the range of 1.5 to 70 hours. From the viewpoint that the melting onset temperature of the polymer powder to be obtained becomes high and the difference between the melting point and the melting onset temperature becomes small, and further, from the viewpoint that the crystallization onset temperature becomes low and the difference between the melting onset temperature and the crystallization onset temperature becomes large, the reaction time is preferably increased to increase the molecular weight, and the lower limit of the polymerization time is more preferably 2.0 hours or longer, further preferably 2.5 hours or longer, and particularly preferably 3.0 hours or longer. From the viewpoint of, while ensuring that the polymerization progresses and a polyamide with a high molecular weight is obtained, preventing side reactions of the polyamide such as a three-dimensional crosslinked product, coloring, or deterioration of the polymer incompatible with the polyamide to be obtained, the upper limit of the polymerization time is more preferably 50 hours or less, further preferably 25 hours or less, and particularly preferably 10 hours or less.

A polymerization accelerator may be added within a range where the effect of the present invention is not impaired. As the accelerator, known ones can be used, for example, inorganic phosphorus compounds such as phosphoric acid, phosphorous acid, hypophosphorous acid, pyrophosphoric acid, polyphosphoric acid, and alkali metal salts and alkaline earth metal salts thereof can be exemplified. Two or more kinds of these may be used. Although the amount to be added can be appropriately selected, it is preferred to add 1 part by mass or less per 100 parts by mass of the polyamide monomer.

Further, it is also possible to add other additives, and for example, exemplified are surfactants for controlling the particle size of the polymer powder, dispersants, and for modifying the properties of the polymer powder or improving the stability of used polymers incompatible with the polyamide to be obtained, antioxidants, thermal stabilizers, weather-proofing agents, lubricants, pigments, dyes, plasticizers, antistatic agents, flame retardants, carbon black, silica, titanium dioxide, and fillers such as glass fibers, glass beads and carbon fibers. Two or more kinds of these may be used. Further, two or more different substances may be used for the purpose of modifying the polyamide monomer or polyamide and for the purpose of modifying the polymer incompatible with the polyamide to be obtained. The amount to be added can be appropriately selected.

In the present invention, since the polymer powder is homogeneously induced from the uniform solution, fine powder can be produced without stirring, but stirring may be performed in order to more control the particle size or to make the particle size distribution more uniform. As the stirring device, known devices such as stirring blades, melt kneaders, and homogenizers can be used, and for example, in the case of stirring blades, propeller, paddle, flat, turbine, cone, anchor, screw, helical types, etc. can be exemplified. The stirring speed depends on the polyamide monomers and the molecular weights, but it is preferably in the range of 0 to 2,000 rpm from the viewpoint of uniformly transferring heat even in a large-sized device and preventing the liquid from adhering to the wall surface, thereby changing the compounding ratio or the like. The lower limit of the stirring speed is more preferably 10 rpm or more, further preferably 30 rpm or more, and particularly preferably 50 rpm or more, and the upper limit of the stirring speed is more preferably 1,600 rpm or less, further preferably 1,200 rpm or less, and particularly preferably 800 rpm or less.

As the method for isolating the polymer powder from the mixture of the polymer powder after the polymerization and the polymer incompatible with the polyamide to be obtained, exemplified are a method of isolating after discharging the mixture at the time of the completion of the polymerization into a poor solvent for the polymer powder, a method of isolating after adding a poor solvent for the polymer powder into a reaction vessel, or the like. From the viewpoint of preventing the polymer powders from melting and coalescing to increase the particle size distribution index, a method of discharging the mixture into a poor solvent for the polymer powder after cooling the mixture to the melting point of the polymer powder or lower, more preferably to the crystallization temperature or lower, and isolating, or a method of adding a poor solvent for polymer powder to a reaction vessel, and for isolating, or the like, is preferred, and the method of adding a poor solvent for polymer powder to a reaction vessel and isolating is more preferred. As the isolation method, known methods such as pressure reduction, pressurized filtration, decantation, centrifugation, and spray drying can be appropriately selected.

The poor solvent for the polymer powder is preferably a solvent which does not dissolve the polymer but dissolves the polyamide monomer and the polymer incompatible with the polyamide to be obtained. Such a solvent can be appropriately selected, alcohols such as methanol, ethanol, and isopropanol, and water, can be exemplified, and water is preferred from the viewpoint of preventing voids from generating in the model object originating from organic solvents.

Cleaning, isolation and drying of the polymer powder can be carried out by known methods. As the cleaning method for removing deposits and inclusions from the polymer powder, reslurry cleaning or the like can be used, and heating may be appropriately applied. The solvent used for the cleaning is not particularly restricted as long as it does not dissolve the polymer powder but dissolves the polyamide monomer and the polymer incompatible with the polyamide to be obtained, and water is preferable from the viewpoint of economy. The isolation can be appropriately selected from pressure reduction, pressurized filtration, decantation, centrifugation, spray drying, and the like. By this cleaning and isolation, the polymer incompatible with the polyamide to be obtained is removed to less than 0.001% by mass with respect to the polymer powder. The drying is preferably carried out at the melting point of the polymer powder or lower, and it may be carried out under reduced pressure. Air drying, hot air drying, heat drying, vacuum drying, freeze drying, and the like are selected.

Production of a 3-dimensional model object by the powder bed fusion method of the present invention indicates a method for producing a model object laminated by powder bed fusion method, by applying a selective laser sintering method in which a thin layer forming step of spreading the polymer powder into a thin layer, and a cross-section forming step of joining the polymer powders by irradiating a laser beam to the thin layer in a shape corresponding to the cross-sectional shape of the object to be modeled, are sequentially repeated, or a selective absorption (or suppression) sintering method in which a thin layer forming step of spreading the polymer powder into a thin layer, a printing step of printing an energy absorption accelerator or an energy absorption inhibitor in a shape corresponding to the cross-sectional shape of the object to be modeled, and a cross-section forming step of joining the polymer powders using an electromagnetic radiation, are sequentially repeated.

Although the electromagnetic radiation used for the selective absorption (suppression) sintering may be any radiation that does not impair the quality of the polymer powder or the model object, because an energy relatively inexpensive and suitable for modeling can be obtained, an infrared ray is preferred. Further, the electromagnetic radiation may or may not be coherent.

The energy absorption accelerator is a substance which absorbs the electromagnetic radiation. As such substances, exemplified are carbon black, carbon fiber, copper hydroxy phosphate, near-infrared absorbing dyes, near-infrared absorbing pigments, metal nanoparticles, polythiophene, poly(p-phenylene sulfide), polyaniline, poly(pyrrole), polyacetylene, poly(p-phenylene vinylene), polyparaphenylene, poly(styrene sulfonate), poly(3,4-ethylenedioxythiophene)-poly(styrene phosphonate) p-diethylamino benzaldehyde diphenyl hydrazone, anti-9-isopropyl carbazole-3-, a conjugated polymer consisting of a combination thereof and the like, and these may be used alone or in combination of a plurality thereof.

The energy absorption inhibitor is a substances which hardly absorbs the electromagnetic radiation. As such substances, exemplified are substances reflecting particle electromagnetic radiation such as titanium, heat-insulating powders such as mica powder and ceramic powder, water and the like, and these may be used alone or in combination of a plurality thereof.

These selective absorbers or selective inhibitors may be used alone or in combination, respectively.

In the step of printing the selective absorber or selective inhibitor in a shape corresponding to the cross-sectional shape of the model object, a known method such as inkjet can be used. In this case, the selective absorber or selective inhibitor may be used as it is or may be dispersed or dissolved in a solvent.

The modeling device in the present invention is a production device for producing a 3-dimensional model object by the powder bed fusion method. A small-sized modeling device is a modeling device with a work size of less than 0.01 $m^3$. Concretely, RaFaEl II 150-HT (supplied by Aspect Inc.) is exemplified. A large-sized modeling device is a modeling device with a work size of 0.01 $m^3$ or more. Concretely, RaFaEl II 300-HT (supplied by Aspect Inc.) and RaFaEl II 550-HT (supplied by Aspect Inc.) are exemplified.

Examples

Hereinafter, the present invention will be explained based on examples, but the present invention is not limited to these.

(1) Melting point, Melting onset temperature, Crystallization onset temperature, Crystallization temperature of polymer powder:

Using a differential scanning calorimeter (DSCQ20) supplied by TA Instruments Japan Inc., the melting point, melting onset temperature, crystallization onset temperature and crystallization temperature were calculated from the endothermic peak observed when heating 10 mg of polymer powder from 30°C at a rate of 20 °C/min in a nitrogen atmosphere, and from the exothermic peak appearing when elevating the temperature to a temperature 50°C higher than the endothermic peak top, holding the temperature for 1 minute, and then cooling the temperature to 30°C at a rate of 20°C/min.

The melting point was defined as a peak top temperature of an endothermic peak observed when elevating the temperature. The melting onset temperature was defined as a lowest temperature among temperatures at each of which a first temperature differential value of Heat Flow (W/g) observed between an endothermic peak top temperature observed when elevating the temperature and a temperature point of -50°C from the endothermic peak top became -0.2 (W/g·°C). The crystallization onset temperature was defined as a highest temperature among temperatures at each of which a first temperature differential value of Heat Flow (W/g) observed between an exothermic peak top temperature observed when lowering the temperature and a temperature point of +50°C from the exothermic peak top became -0.1 (W/g·°C). The crystallization onset temperature was defined as a temperature at the exothermic peak top observed when lowering the temperature.

(2) D50 particle size and D90/D10 of particle distribution index:

A dispersion prepared by previously dispersing about 100 mg of polymer powder in about 5 mL of deionized water was added to a laser diffraction particle size distribution analyzer ("Microtrac" MT3300EXII) supplied by Nikkiso Co., Ltd., until reaching a measurable concentration, and after performing ultrasonic dispersion in the analyzer for 60 seconds at 30W, the particle size at which the cumulative frequency from the small particle size side of the particle size distribution measured for 10 seconds became 50% was defined as the D50 particle size. D90/D10 indicating the particle size distribution index was defined as a value obtained by dividing the particle size (D90) at which the cumulative frequency from the small particle size side of the particle size distribution measured by the above-described method became 90% with the particle size (D10) at which the cumulative frequency from the small particle size side became 10%. Where, 1.52 was used as the refractive index at the time of measurement, and 1.333 was used as the refractive index of the medium (deionized water).

(3) Weight average molecular weight and number average molecular weight of polyamide forming polymer powder:

The weight average molecular weight and the number average molecular weight of polyamide were determined by using gel permeation chromatography and comparing with a calibration curve due to polymethyl methacrylate. A measurement sample was prepared by dissolving about 3 mg of polymer powder in about 3 g of hexafluoro isopropanol.

Apparatus: Waters e-Alliance GPC system
Column: HFIP-806M supplied by Showa Denko Co., Ltd. $\times$ 2
Moving phase: 5 mmol/L sodium trifluoro acetate/hexafluoro isopropanol
Flow rate: 1.0 ml/min

Temperature: 30°C
Detection: differential refractometer

(4) Rate of polyamide having a molecular weight of 3,000 or less in polyamide forming polymer powder:
After measuring the molecular weight by the above-described method of (3), respective slice molecular weights and slice heights were calculated, and the rate of the cumulative slice heights each having a slice molecular weight of 3,000 or less was defined as the rate of polyamide having a molecular weight of 3,000 or less.

[Equation 4]

Rate of polyamide having a molecular weight of 3,000 or less =

(Total of slice heights each having a slice molecular weight of 3,000 or less/

Total of slice heights) × 100

(5) Quantification of carboxylic end groups of polyamide:
0.5 g of polymer powder was dissolved in 20 mL of benzyl alcohol and dissolved by heating at 190°C for 2 hours. After confirming dissolution, several drops of phenolphthalein indicator were added. Titration was performed with a 1/50 N-KOH ethanol solution, and a point colored with red was taken as the terminal point.

[Equation 5]

$$COOH = \frac{1/50 \times (T - B) \times f \times 10^{-3}}{W}$$

Where, in the above-described equation, COOH: amount of carboxylic end groups of polyamide, T: titration amount of 1/50N-KOH ethanol solution (mL) , B: titration amount of 1/50N-KOH ethanol solution required for blank (mL), f : titer of 1 /50N-KOH ethanol solution, W: weight of sample taken (g) .
(6) Quantification of amine end groups of polyamide:
0.5 g of polymer powder was dissolved in dissolved in 25 mL of P.E.A (phenol/ethanol solvent). After confirming dissolution, several drops of thymol blue indicator were added. Titration was performed with a 1/50N-HCl aqueous solution, and a point colored with light red was taken as the terminal point.

[Equation 6]

$$NH_2 = \frac{1/50 \times (A - B) \times f \times 10^{-3}}{W}$$

Where, in the above-described equation, $NH_2$ : amount of amine end groups of polyamide, A: titration amount of 1/50N-HCl aqueous solution (mL), B: titration amount of 1/50N-HCl aqueous solution required for blank (mL), f: titer of 1/50N-HCl aqueous solution, W: weight of sample taken (g).
(7) Sphericity of polymer powder:
The sphericity of the polymer powder is calculated from the average value of the ratio of the minor axis to the major axis of each particle obtained by observing 30 particles at random from photographs taken with a scanning electron microscope (scanning electron microscope JSM-6301NF supplied by JEOL Ltd.).

[Equation 7]

$$S = \left[\sum_{i=1}^{n}(b/a)\right] \times 100/\text{n}$$

Where, in the above-described equation, S: sphericity, a: major axis, b: minor axis, n: number of measurements; 30.
(8) Melting degree of powder present in laser non-irradiation area when using large-sized modeling device:
After completion of modeling, 100g of the powder remaining in the modeling device was sampled and pulverized with a mortar and pestle, the powder was passed through a 500 $\mu$m sieve, and the weight of the powder on the sieve was determined. The ratio of the weight W of the powder on the sieve to 100g of charged powder was defined as the melting degree of laser non-irradiation area powder.

[Equation 8]

Melting degree of laser non-irradiation area powder = (W/100) × 100

The evaluation was performed according to the following criteria.

A: The weight of the powder on the sieve is 5 wt% or less.
B: The weight of the powder on the sieve is more than 5 wt% and 20 wt% or less.
C: The weight of the powder on the sieve is more than 20 wt% and 30 wt% or less.
D: The weight of the powder on the sieve is more than 30 wt%, or the model object is fused.

A to C: acceptable, D: un acceptable.
(9) Evaluation of warpage amount of model object obtained from large-sized modeling device:
The obtained test piece was placed on a horizontal surface in a convex state toward upper side, and a taper gauge was inserted into the gap between the horizontal surface and the test piece to measure the height of the gap, a value converted per a length of 10 cm of the test piece was calculated as the amount of warpage, and the warpage amount was evaluated according to the following criteria.

AA: The warpage amount is 0.05 mm/10 cm or less.
A: The warpage amount is more than 0.05 mm/10 cm and 0.1 mm/10 cm or less.
B: The warpage amount is more than 0.1 mm/10 cm and 0.2 mm/10 cm or less.
C: The warpage amount is more than 0.2 mm/10 cm and 0.3 mm/10 cm or less.
D: The warpage amount is more than 0.3 mm/10 cm.

AA to C: acceptable, D: un acceptable.
(10) Evaluation of ratio of change in molecular weight before and after modeling:
The weight average molecular weight of the polyamide forming the polymer powder after modeling (Mw. of polyamide after modeling) was calculated by measuring the powder after modeling by the method of (3). A value obtained by dividing the obtained weight average molecular weight Mw. of the polyamide after modeling with the weight average molecular weight of the polyamide forming the polymer powder measured in (3) (Mw. of polyamide before modeling) was defined as the ratio of change in molecular weight before and after modeling.

[Equation 9]

Ratio of change in molecular weight before and after modeling =

Mw. of polyamide after modeling/Mw. of the polyamide before modeling

The evaluation was performed according to the following criteria.

> A: The ratio of change in molecular weight before and after modeling is 0.90 or more and less than 1.40.
> B: The ratio of change in molecular weight before and after modeling is 1.40 or more and less than 1.50, or 0.85 or more and less than 0.90.
> C: The ratio of change in molecular weight before and after modeling is 1.50 or more and less than 1.60, or 0.80 or more and less than 0.85.
> D: The ratio of change in molecular weight before and after modeling is 1.60 or more, or less than 0.80.

A, B, and C: acceptable, D: unacceptable.

[Example 1]

Into a 3L autoclave, 360g of ε-caprolactam (reagent special grade supplied by FUJIFILM Wako Pure Chemical Corporation) as a polyamide monomer, 240g of polyethylene glycol (1st grade polyethylene glycol 6,000 supplied by Wako Pure Chemical Industries, Ltd., molecular weight: 7,700) as a polymer incompatible with a polyamide to be obtained, 2.5g of antioxidant ("IRGANOX" (registered trademark) 1098, supplied by BASF Corporation), and 50g of deionized water, were added, and after sealing, a process of pressurizing to 1 MPa with nitrogen and releasing to 0.1 MPa was repeated three times, and after replacing the inside of the vessel with nitrogen, the pressure was adjusted to 0.1 MPa and the vessel was sealed. Thereafter, the stirring speed was set at 60 rpm and the temperature was elevated up to 230°C. At this time, the pressure in the system was 1.4 MPa, and the stirring was continued for 3 hours at 60 rpm while maintaining the pressure and temperature. Next, the pressure was released at a rate of 0.02 MPa/min to bring the internal pressure to 0 MPa. Thereafter, the polymerization temperature was set at 210°C, and nitrogen was supplied at a rate of 5 L/min to perform the polymerization for 1.5 hours. Finally, by discharging into a 2,000g water bath, a slurry was obtained. After sufficiently homogenizing the slurry by stirring, it was filtered, and 2,000 g of water was added to the filtrate and cleaning at 80°C was performed. After that, a slurry solution obtained by having passed the slurry through a 100 μm sieve to remove aggregates was filtered again, and the isolated filtrate was dried at 80°C for 12 hours to obtain 313 g of polymer powder (yield: 87%). The obtained polymer powder had a melting point of 217°C, a melting onset temperature of 189°C, a crystallization onset temperature of 186°C, and a crystallization temperature of 171°C. Further, the D50 particle size was 55 μm and the D90/D10 was 2.3. The weight average molecular weight was 46,000, the rate of polyamide having a molecular weight of 3,000 or less in the polyamide was 0.3 wt%, and the weight average molecular weight/number average molecular weight was 1.7. The amount of carboxylic end groups of the polyamide was $7.8 \times 10^{-5}$ mol/g, the amount of amine end groups was $8.5 \times 10^{-5}$ mol/g, and the ratio of the amount of carboxylic end groups and the amount of amine end groups of the polyamide was 0.92. The sphericity was 95. Properties of the polymer powder are described in Table 1.

Subsequently, the above-described synthesis of the polymer powder was repeated, and using 5 kg of the obtained polymer powder, production of a test piece model object with a size of 80 mm × 10 mm × 4 mm was carried out for 12 hours using a powder bed fusion device (RaFaEl II 300-HT) supplied by Aspect Inc. The setting conditions were use of 60W $CO_2$ laser, lamination height of 0.1 mm, laser scanning interval of 0.1 mm, laser scanning speed of 10 m/s, and laser output of 16W. As the temperature setting, the temperature of the supply tank was set at the crystallization temperature -5°C, and the temperature of the parts bed was set at the melting point -15°C as the initial temperature. When the melting degree of powder present in a laser non-irradiation area when using a large-sized modeling device was evaluated, it was 25 wt% and the rank was C. When the obtained model object was subjected to warpage evaluation, it was 0.21 mm/10 cm and the rank was C. When the ratio of change in molecular weight before and after modeling was evaluated, Mw. after modeling was 69,000 and the rank was C. The modeling properties of the polymer powder are shown in Table 2.

[Example 2]

A polymer powder was obtained in the same manner as in Example 1 other than a condition where the polymerization time was changed to 2 hours. Thereafter, 0.1 part by mass of trimethylsilylated amorphous silica (X-24-9500, supplied by Shin-Etsu Chemical Co., Ltd.) having an average particle size of 170 nm as a flow aid is added to 100 parts by mass of polyamide, and dry blended. The properties of the obtained polymer powder are shown in Table 1, and the modeling properties are shown in Table 2.

[Example 3]

A polymer powder was obtained in the same manner as in Example 2 other than a condition where the polymerization time was changed to 3 hours. The properties of the obtained polymer powder are shown in Table 1, and the modeling properties are shown in Table 2.

[Example 4]

A polymer powder was obtained in the same manner as in Example 2 other than a condition where the polymerization time was changed to 4 hours. The properties of the obtained polymer powder are shown in Table 1, and the modeling properties are shown in Table 2.

[Example 5]

A polymer powder was obtained in the same manner as in Example 3 other than a condition where 3.11g of benzoic acid (supplied by FUJIFILM Wako Pure Chemical Corporation) was added as a monofunctional end adjuster. The properties of the obtained polymer powder are shown in Table 1, and the modeling properties are shown in Table 2.

[Example 6]

A polymer powder was obtained in the same manner as in Example 3 other than a condition where 1.95g of benzoic acid (supplied by FUJIFILM Wako Pure Chemical Corporation) was added as a monofunctional end adjuster. The properties of the obtained polymer powder are shown in Table 1, and the modeling properties are shown in Table 2.

[Example 7]

A polymer powder was obtained in the same manner as in Example 3 other than a condition where 2.37g of aniline (supplied by FUJIFILM Wako Pure Chemical Corporation) was added as a monofunctional end adjuster. The properties of the obtained polymer powder are shown in Table 1, and the modeling properties are shown in Table 2.

[Example 8]

A polymer powder was obtained in the same manner as in Example 3 other than conditions where 0.3 part by mass of trimethylsilylated amorphous silica (X-24-9500, supplied by Shin-Etsu Chemical Co., Ltd.) having an average particle size of 170 nm was added as a flow aid with respect to 100 parts by mass of polyamide, and 67 parts by mass of glass beads GB731A (supplied by Potters-Ballotini Co., Ltd., average major axis diameter: 27 $\mu$m, average minor axis diameter: 26 $\mu$m) was dry blended as an inorganic reinforcing agent with respect to 100 parts by mass of polyamide. The properties of the obtained polymer powder are shown in Table 1, and the modeling properties are shown in Table 2.

[Example 9]

A polymer powder was obtained in the same manner as in Example 8 other than a condition where 43 parts by mass of glass beads GB301S (supplied by Potters-Ballotini Co., Ltd., average major axis diameter: 41 $\mu$m, average minor axis diameter: 40 $\mu$m) was added and dry blended as an inorganic reinforcing agent instead of glass beads GB731A. The properties of the obtained polymer powder are shown in Table 1, and the modeling properties are shown in Table 2.

[Example 10]

A polymer powder was obtained in the same manner as in Example 8 other than a condition where 43 parts by mass of glass fibers EPG40M-10A (supplied by Nippon Electric Glass Co., Ltd., average major axis diameter: 43 $\mu$m, average minor axis diameter: 10 $\mu$m) was added and dry blended instead of glass beads GB731A. The properties of the obtained polymer powder are shown in Table 1, and the modeling properties are shown in Table 2.

[Example 11]

A polymer powder was obtained in the same manner as in Example 8 other than a condition where 43 parts by mass of glass fibers EPG70M-01N (supplied by Nippon Electric Glass Co., Ltd., average major axis diameter: 73 $\mu$m, average minor axis diameter: 10 $\mu$m) was added and dry blended instead of glass beads GB731A. The properties of the obtained polymer powder are shown in Table 1, and the modeling properties are shown in Table 2.

[Example 12]

A polymer powder was obtained in the same manner as in Example 4 other than conditions where ε-caprolactam as a polyamide monomer for polyamide was changed to 201g of adipic acid (supplied by Tokyo Chemical Industry Co., Ltd.) and 318g of hexamethylene diamine 50% aqueous solution (supplied by Tokyo Chemical Industry Co., Ltd.), and the polymerization temperature was changed to 240°C. The properties of the obtained polymer powder are shown in Table 1, and the modeling properties are shown in Table 2.

[Example 13]

A polymer powder was obtained in the same manner as in Example 4 other than conditions where 306g of ε-caprolactam, 30g of adipic acid and 48g of hexamethylene diamine 50% aqueous solution (supplied by Tokyo Chemical Industry Co., Ltd.) were used for a polyamide monomer for polyamide. The properties of the obtained polymer powder are shown in Table 1, and the modeling properties are shown in Table 2.

[Example 14]

After adding 300g of the polymer powder obtained in Example 3 to a 3L autoclave and sealing it, the process of pressurizing to 1 MPa with nitrogen and releasing the pressure to 0.1 MPa was repeated three times, and after replacing the inside of the vessel with nitrogen, the pressure was adjusted at 0.1 MPa, and the vessel was closed and sealed. Thereafter, the stirring speed was set at 60 rpm, the temperature was elevated to 250°C, and after it was stirred at 60 rpm for 3 hours, it was discharged. Polyamide 6 obtained by the discharge was pulverized for 120 minutes with a jet mill (100AFG supplied by Hosokawa Micron Corporation) to obtain a polymer powder having a D50 particle size of 52 μm. The properties of the obtained polymer powder are shown in Table 1, and the modeling properties are shown in Table 2.

[Comparative Example 1]

A polymer powder was obtained in the same manner as in Example 1 other than a condition where the polymerization time was changed to 1 hour. The properties of the obtained polymer powder are shown in Table 1, and the modeling properties are shown in Table 2.

[Comparative Example 2]

A polymer powder was obtained in the same manner as in Example 3 other than a condition where 5.44 g of benzoic acid (supplied by FUJIFILM Wako Pure Chemical) was added as a monofunctional end adjuster. At that time, many lumps were generated. The properties of the obtained polymer powder are shown in Table 1, and the modeling properties are shown in Table 2.

[Comparative Example 3]

Polyamide 6 ("Ultramid" (registered trademark) B27 supplied by BASF Corporation) was pulverized for 120 minutes with a jet mill (100AFG manufactured by Hosokawa Micron Corporation) to obtain a polymer powder having a D50 particle size of 55 μm. The properties of the obtained polymer powder are shown in Table 1, and the modeling properties are shown in Table 2.

[Comparative Example 4]

25 g of polyamide 6 ("Ultramid" (registered trademark) B27 supplied by BASF Corporation) was dissolved in 250 g of an aqueous solution of 42.5 wt% ε-caprolactam (reagent special grade supplied by FUJIFILM Wako Pure Chemical Corporation) and precipitated to obtain a polymer powder. The properties of the obtained polymer powder are shown in Table 1, and the modeling properties are shown in Table 2.

[Table 1]

| | Example 1 | Example 2 | Example 3 | Example 4 | Example 5 | Example 6 | Example 7 | Example 8 | Example 9 |
|---|---|---|---|---|---|---|---|---|---|
| Melting onset temperature (°C) | 189 | 190 | 192 | 194 | 186 | 192 | 182 | 192 | 192 |
| Melting point (°C) | 217 | 217 | 218 | 218 | 213 | 215 | 211 | 218 | 218 |
| Difference between melting point and melting onset temperature (°C) | 28 | 27 | 26 | 24 | 27 | 23 | 29 | 26 | 26 |
| Crystallization onset temperature (°C) | 186 | 181 | 181 | 179 | 178 | 177 | 180 | 186 | 187 |
| Crystallization temperature (°C) | 171 | 170 | 168 | 170 | 170 | 171 | 171 | 176 | 178 |
| Difference between melting onset temperature and crystallization onset temperature (°C) | 3 | 9 | 11 | 15 | 8 | 15 | 3 | 6 | 5 |
| D50 particle size (μm) | 55 | 52 | 50 | 55 | 51 | 50 | 51 | 50 | 50 |
| D90/D10 | 2.3 | 2.3 | 2.4 | 2.4 | 2.3 | 2.3 | 2.8 | 2.4 | 2.4 |
| Weight average molecular weight | 46,000 | 54,000 | 74,000 | 118,000 | 49,000 | 58,000 | 46,000 | 74.000 | 74,000 |
| Rate of polyamide having a molecular weight of 3,000 or less in polyamide | 0.3 | 0.2 | 0.1 | 0.1 | 0.3 | 0.2 | 0.3 | 0.1 | 0.1 |
| Weight average molecular weight! number average molecular weight | 1.7 | 1.7 | 1.5 | 1.5 | 1.8 | 1.7 | 1.8 | 1.5 | 1.5 |
| Amount of carboxylic end groups of polyamide ($\times 10^{-5}$ mol/g) | 7.8 | 6.3 | 2.9 | 1.8 | 6.0 | 6.8 | 2.5 | 2.9 | 2.9 |
| Amount ot amine end groups of polyamide ($\times 10^{-5}$ mol/g) | 8.5 | 6.4 | 3.0 | 2.1 | 1.8 | 2.0 | 8.0 | 3.0 | 3.0 |
| Ratio of amount of carboxylic end groups and amine end groups of polyamide | 0.92 | 0.98 | 0.97 | 0.86 | 0.30 | 0.29 | 0.31 | 0.97 | 0.97 |
| Sphericity | 95 | 95 | 96 | 96 | 95 | 95 | 92 | 96 | 96 |

(continued)

| | Example 10 | Example 11 | Example 12 | Example 13 | Example 14 | Comparative Example 1 | Comparative Example 2 | Comparative Example 3 | Comparative Example 4 |
|---|---|---|---|---|---|---|---|---|---|
| Melting onset temperature (°C) | 192 | 192 | 231 | 164 | 189 | 187 | 180 | 177 | 179 |
| Melting point (°C) | 218 | 218 | 256 | 193 | 217 | 217 | 211 | 216 | 216 |
| Difference between melting point and melting onset temperature (°C) | 26 | 26 | 25 | 29 | 28 | 30 | 31 | 39 | 37 |
| Crystallization onset temperature (°C) | 187 | 188 | 220 | 155 | 186 | 186 | 176 | 177 | 177 |
| Crystallization temperature (°C) | 180 | 181 | 212 | 143 | 171 | 173 | 173 | 167 | 167 |
| Difference between melting onset temperature and crystallization onset temperature (°C) | 5 | 4 | 11 | 9 | 3 | 1 | 4 | 0 | 2 |
| D50 particle size ($\mu$m) | 50 | 50 | 50 | 60 | 52 | 48 | 48 | 55 | 73 |
| D90/D 10 | 2.4 | 2.4 | 2.3 | 2.4 | 3.4 | 1.6 | 2.9 | 3.5 | 2.2 |
| Weight average molecular weight | 74,000 | 74.000 | 80,000 | 59,000 | 74,000 | 37,000 | 28,000 | 63,000 | 63,000 |
| Rate of polyamide having a molecular weight of 3,000 or less in polyamide | 0.1 | 0.1 | 0.2 | 0.3 | 0.1 | 1.5 | 0.8 | 0.5 | 0.5 |
| Weight average molecular weight! number average molecular weight | 1.5 | 1.5 | 1.7 | 1.7 | 1.5 | 1.6 | 1.9 | 1.9 | 1.9 |
| Amount ot carboxylic end groups of polyamide ($\times$ $10^{-5}$ mol/g) | 2.9 | 2.9 | 5.8 | 5.2 | 2.9 | 9.5 | 14.5 | 4.4 | 4.3 |
| Amount of amine end groups of polyamide ($\times$ $10^{-5}$ mol/g) | 3.0 | 3.0 | 1.5 | 9.2 | 3.0 | 10.4 | 0.3 | 4.3 | 4.3 |
| Ratio of amount of carboxylic end groups and amine end groups of polyamide | 0.97 | 0.97 | 0.26 | 0.57 | 0.97 | 0.91 | 0.02 | 0.98 | 1.0 |
| Sphericity | 96 | 96 | 94 | 95 | 65 | 95 | 90 | 63 | 73 |

| | Example 1 | Example 2 | Example 3 | Example 4 | Example 5 | Example 6 | Example 7 | Example 8 | Example 9 |
|---|---|---|---|---|---|---|---|---|---|
| Evaluation of melting degree of powder present in laser non-irradiation area when using large-sized modeling device | c | B | A | B | B | A | C | A | A |
| Evaluation of warpage amount of model object obtained from large-sized modeling device | C | A | A | A | B | A | C | AA | AA |
| Evaluation of ratio of change in molecular weight | C | B | B | B | A | A | A | B | B |

| | Example 10 | Example 11 | Example 12 | Example 13 | Example 14 | Comparative Example 1 | Comparative Example 2 | Comparative Example 3 | Comparative Example 4 |
|---|---|---|---|---|---|---|---|---|---|
| Evaluation of melting degree of powder present in laser non-irradiation area when using large-sized modeling device | A | A | A | A | C | D | D | D | D |
| Evaluation of warpage amount of model object obtained from large-sized modeling device | AA | AA | A | A | C | D | C | D | D |
| Evaluation of ratio of change in molecular weight | B | B | B | B | B | D | A | D | D |

**Claims**

1.  A polymer powder comprising a polyamide, **characterized in that** a melting point determined in differential scanning calorimetry is 190°C or higher, a difference between the melting point and a melting onset temperature determined in differential scanning calorimetry is less than 30°C, and a D50 particle size is 1 μm or more and 100 μm or less.

2.  The polymer powder according to claim 1, wherein a difference between the melting onset temperature and a crystallization onset temperature determined in differential scanning calorimetry is 3°C or more.

3.  The polymer powder according to claim 1 or 2, wherein a polyamide having a molecular weight of 3,000 or less accounts for 0.4 wt% or less of the total polyamide.

4.  The polymer powder according to any one of claims 1 to 3, wherein a weight average molecular weight is 40,000 or more.

5.  The polymer powder according to any one of claims 1 to 4, wherein a weight average molecular weight/a number average molecular weight is 1.8 or less.

6.  The polymer powder according to any one of claims 1 to 5, wherein a ratio of an amount of carboxylic end groups to an amount of amine end groups of the polyamide is 0.001 or more and 0.8 or less.

7.  The polymer powder according to any one of claims 1 to 6, wherein a ratio of D90/D10 of a particle size distribution is less than 3.0.

8.  The polymer powder according to any one of claims 1 to 7, wherein a sphericity is 80 or more.

9.  The polymer powder according to any one of claims 1 to 8, wherein the polyamide comprises at least one of polyamide 6, polyamide 66, or a copolymer thereof.

10. The polymer powder according to any one of claims 1 to 9, wherein a flow aid is contained at 0.01 parts by mass or more and 5 parts by mass or less with respect to 100 parts by mass of the polyamide.

11. The polymer powder according to any one of claims 1 to 10, wherein an inorganic reinforcing material is contained at 10 parts by mass or more and 200 parts by mass or less with respect to 100 parts by mass of the polyamide.

12. A method for producing a polymer powder according to any one of claims 1 to 9, being a method for producing a polymer powder comprising a polyamide by polymerizing a polyamide monomer in the presence of a polymer incompatible with the polyamide to be obtained, wherein the polyamide monomer and the polymer are uniformly dissolved at the start of polymerization, and the polymerization is performed at a temperature of a crystallization temperature + 20°C or more and a melting point or less of the polyamide to be obtained until a difference between the melting point and a melting onset temperature determined in differential scanning calorimetry of the polyamide to be obtained becomes less than 30°C.

13. The method for producing a polymer powder according to claim 12, wherein an end adjuster is added at 0.001 mol% or more and 0.8 mol% or less at the start of polymerization.

14. A method for producing a 3-dimensional model object by a powder bed fusion method using a polymer powder according to any one of claims 1 to 11.

# EP 4 299 648 A1

**INTERNATIONAL SEARCH REPORT**

| International application No. |
| --- |
| **PCT/JP2022/007368** |

**A. CLASSIFICATION OF SUBJECT MATTER**

*C08G 69/02*(2006.01)i; *C08G 69/08*(2006.01)i; *C08J 3/16*(2006.01)i; *B33Y 10/00*(2015.01)i; *B29C 64/153*(2017.01)i; *B29C 64/314*(2017.01)i; *B33Y 70/00*(2020.01)i
FI: B29C64/153; B33Y10/00; B33Y70/00; C08G69/02; C08G69/08; C08J3/16 CFG; B29C64/314

According to International Patent Classification (IPC) or to both national classification and IPC

**B. FIELDS SEARCHED**

Minimum documentation searched (classification system followed by classification symbols)

C08G69/00-69/50; C08J3/16; B33Y10/00-99/00; B29C64/00-64/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2018/207728 A1 (TORAY INDUSTRIES, INC.) 15 November 2018 (2018-11-15) claims, paragraphs [0022]-[0085] | 1-9, 12 |
| Y | | 10-11, 14 |
| A | | 13 |
| X | JP 2018-196983 A (RICOH CO., LTD.) 13 December 2018 (2018-12-13) claims, paragraphs [0019], [0022]-[0061], [0103] | 1,9-11,14 |
| Y | | 10-11, 14 |
| A | | 2-8,12-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 March 2022** | **05 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/007368**

| Patent document cited in search report | | | Publication date (day/month/year) | Patent family member(s) | | | Publication date (day/month/year) |
|---|---|---|---|---|---|---|---|
| WO | 2018/207728 | A1 | 15 November 2018 | US | 2020/0048413 | A1 | |
| | | | | claims, paragraphs [0027]-[0088] | | | |
| | | | | EP | 3623411 | A1 | |
| JP | 2018-196983 | A | 13 December 2018 | US | 2018/0022024 | A1 | |
| | | | | claims, paragraphs [0039], [0043]-[0107], [0182] | | | |
| | | | | EP | 3272788 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019524939 A
- JP 2011518938 A

- WO 2018207728 A